# EUROPÄISCHE PATENTANMELDUNG

(11) **EP 1 300 439 A1**
(43) Veröffentlichungstag der Anmeldung: **09.04.2003**
(21) Anmeldenummer: 01810940.5
(22) Anmeldetag: 26.09.2001
(51) Int. Cl.: C08K 9/04, H01B 3/40, H01B 3/10

(54) **Füllstoff für die Verwendung in elektrischen Feststoff-Isolatoren**

(71) Anmelder: ABB RESEARCH LTD., 8050 Zürich (CH)
(72) Erfinder: Rocks, Jens, 8057 Zürich (CH)
(74) Vertreter: ABB Patent Attorneys

(57) **Zusammenfassung**

Der Füllstoff besteht aus anorganischen Pulverteilchen, welche mit einer organischen hyperverweigten dendritischen polymeren Verbindung beschichtet sind. Ein solcher Füllstoff ist geeignet zur Verwendung in elektrischen Feststoff-Isolatoren auf der Basis einer Duroplastmatrix.

## Beschreibung

Die vorliegende Erfindung betrifft einen Füllstoff bestehend aus anorganischen Pulverteilchen, welche mit einer organischen hyperverweigten polymeren Verbindung beschichtet sind. Der erfindungsgemässe Füllstoff ist insbesondere für die Verwendung in elektrischen Feststoff-Isolatoren geeignet. Die vorliegende Erfindung betrifft im weiteren elektrische Feststoff-Isolatoren, welche einen erfindungsgemässen Füllstoff enthalten.

Die elektrischen Isolatoren der vorliegenden Erfindung bestehen aus einer Duroplastmatrix, vorzugsweise aus einer Epoxidharzmatrix, welche mindestens einen erfindungsgemässen Füllstoff enthält.

Mit Füllstoff befüllte elektrische Isolatoren auf der Basis von Duroplasten, z.B. solche auf der Basis von Epoxidharzen, sind an sich bekannt und werden in der Elektrotechnik in unterschiedlichen Anwendungsgebieten, beispielsweise für strukturelle Feststoffisolationen bei Mittel- und Hochspannungsanlagen, wie Generatorschalter oder gasisolierte Schaltanlagen, eingesetzt. Kennzeichnend für solche Duroplaste, wie gehärtete bzw. vernetzte Epoxidharze, ist in der Regel deren vergleichsweise niedrige Elastizität und Zähigkeit. Dies limitiert oder verhindert deren Einsatz insbesondere in Anwendungen, wo die strukturellen Teile gleichzeitig sowohl hoher mechanischer als auch einer starken thermischen Belastung ausgesetzt sind, was besonders bei Anwendungstemperaturen von über 100°C (>100°C) der Fall ist.

### Stand der Technik

In EP-0 359 558 wird als elektrischer Isolator mit verbesserter Zähigkeit eine Polymermatrix auf der Basis von Epoxidharzen vorgeschlagen, welche Quarzpulver und zusätzlich einen elastischen Füllstoff enthält, welcher aus mit polymeren Methylmetacrylat beschichteten Gummikugeln mit Partikeldurchmessern von bis zu 350µm besteht. Aus US 5,236,973 ist es bekannt, die Zähigkeit von Duroplasten durch die zusätzliche Zugabe von Füllstoffen zu erhöhen, welche einen elastisch verformbaren Kern mit steifer Hülle enthalten und einen durchschnittlichen Teilchendurchmesser von weniger als 5µm aufweisen.

### Darstellung der Erfindung

Es wurde nun gefunden, dass elektrische Isolatoren, welche aus einer Duroplastmatrix bestehen, überraschend verbesserte Zähigkeitseigenschaften aufweisen, wenn die Duroplastmatrix mindestens einen Füllstoff enthält, welcher aus anorganischen Pulverteilchen besteht, welche mit einer organischen hyperverweigten dendritischen polymeren Verbindung beschichtet wurden. Die elektrischen Isolatoren können neben dem erfindungsgemässen Füllstoff auch an sich bekannte Füllstoffe, wie z.B. Aluminiumoxid und/oder Siliziumoxid (Quarzmehl), enthalten.

Die vorliegende Erfindung ist in den Patentansprüchen definiert. Insbesondere betrifft die vorliegende Erfindung einen Füllstoff, welcher für die Verwendung in elektrischen Feststoff-Isolatoren auf der Basis einer Duroplastmatrix geeignet ist, und der Füllstoff dadurch gekennzeichnet ist, dass dieser aus anorganischen Pulverteilchen besteht, welche mit einer organischen hyperverweigten dendritischen polymeren Verbindung beschichtet sind. Die Erfindung betrifft auch ein Verfahren zur Herstellung des erfindungsgemässen Füllstoffs.

Die Erfindung betrifft auch die Verwendung des erfindungsgemässen Füllstoffs für die Herstellung von elektrischen Feststoff-Isolatoren auf der Basis einer Duroplastmatrix, insbesondere von strukturellen Feststoff-Isolatoren.

Die Erfindung betrifft im weiteren elektrische Feststoff-Isolatoren, welche aus einer Duroplastmatrix bestehen, welche gegebenenfalls an sich bekannten Füllstoffe enthält, dadurch gekennzeichnet, dass diese Isolatoren mindestens einen erfindungsgemässen Füllstoff in einer wirksamen Konzentration bzw. Menge enthalten.

Der erfindungsgemässe Füllstoff besteht aus anorganischen (mineralischen) Pulverteilchen (oder mehreren agglomerierten Pulverteilchen), welche mit mindestens einem organischen synthetischen hyperverzeigten dendritischen Polymer beschichtet sind.

Die im erfindungsgemässen Füllstoff enthaltenen anorganischen Pulverteilchen sind erfindungsgemäss an sich bekannte, in der Elektroindustrie verwendete, Füllstoffe, wie beispielsweise Siliziumoxid (SiO₂), Aluminiumoxid (Al₂O₃), Titanoxid (Ti₂O) und/oder Dolomit (CaMg[CO₃]₂), in verschiedenen an sich bekannten Mahlungen. Bevorzugt sind Siliziumoxid und/oder Aluminiumoxid. Bevorzugt ist eine Mahlung mit einer durchschnittlichen Korngrösse im Bereich von 1 µm bis 300 µm, vorzugsweise von 5 µm bis 100 µm. Solche in der Elektroindustrie verwendete Füllstoffe sind dem Fachmann bekannt.

Hyperverzweigte Polymere sind an sich bekannt und beispielsweise in Newkome, G. R., Moorefield, C. N. & Vögtle, F., Dendritic Molecules (VCH Publishers Inc., New York, 1996), oder Bosman, A. W., Janssen, H. M. & Meijer, H. E. H., About Dendrimers : Structure, Physical Properties, and Applications, Chem. Rev. 99, 1665-1688 (1999), beschrieben. Sie werden auch als dendritische Polymere bezeichnet.

Es sind dies Polymere, welche dadurch erhalten werden, dass man ein ABₙ-Monomer, worin n vorzugsweise zwei oder drei bedeutet, polymerisiert. ABₙ-Monomere sind Monomere, welche zwei unterschiedliche reaktive Gruppen A und B aufweisen, wobei in demselben Monomeren die eine reaktive Gruppe (z.B. die Gruppe A) nur einmal, und die andere reaktive Gruppe (z.B. die Gruppe B) mindestens zweimal vorhanden ist. Die beiden reaktiven Gruppen A und B sind befähigt, gegebenenfalls über ein Derivat derselben, zusammen chemisch zu reagieren und zu polymerisieren. Dabei entstehen bei der Polymerisation regelmässige verzweigte, gegebenenfalls dreidimensionale, Polymere mit einer baumartigen Struktur, welche endständig die reaktiven Gruppen B aufweisen. Diese endständigen Gruppen B, z.B. Hydroxylgruppen, Amino- oder Carboxylgruppen, können weiter mit reaktiven Verbindungen umgesetzt werden, so dass beispielsweise hyperverzweigte Polymere mit endständigen Epoxidgruppen erhalten werden.

Verbindungen mit einer ABₙ-Struktur, d.h. ABₙ-Monomere, sind beispielsweise aromatische Aminodicarbonsäuren und aromatische Diaminomonocarbonsäuren, wie 5-Amino-isophthalsäure oder 3,5-Diaminobenzoesäure, welche hyperverzweigte Polyarylamide ergeben. Verbindungen mit einer Carboxylgruppe und mindestens zwei Hydroxylgruppen, oder einer Hydroxylgruppe und mindestens zwei Carboxylgruppen, welche hyperverzweigte Polyester ergeben, sind beispielsweise 2,2-Dimethylolpropionsäure [(HOCH₂)₂(CH₃)C-C(O)OH], alpha,alpha-bis(hydroxymethyl)valeriansäure, alpha,alpha,alpha-tris(hydroxymethyl)essigsäure, 3,5-Dihydroxy-benzoesäure oder 5-Hydroxy-isophthalsäure. Bevorzugt sind insbesondere hyperverzweigte Polymere auf der Basis von 2,2-Dimethylolpropionsäure.

Hyperverzeigte dendritische Polymere können auch als Polyether erhalten werden, beispielsweise durch kationische Polymerisation von 3-Ethyl-3-(hydroxymethyl)oxethan, wobei ein hyperverzweigtes Polymer mit endständigen Hydroxylgruppen, welche weiter funktionalisiert werden können, erhalten wird. 3-Ethyl-3-(hydroxymethyl)oxethan leitet sich von Trimethylolpropan ab, wobei im Molekül zwei der Methylolgruppen unter Abspaltung von Wasser zu einer cyclischen Ethergruppe vereint sind. Bevorzugt verwendet man für die Herstellung solcher hyperverzweigten dendritischen Polymere eine Zentralgruppe, vorzugsweise alkoxyliertes, vorzugsweise äthoxyliertes, Pentaerythrit, mit vorzugsweise etwa 5 Äthoxygruppen pro Molekül, wie dies im nächsten Abschnitt beschrieben ist. Solche hyperverzweigten Polyether sind beispielsweise in Proceedings of 24^{th} Australian Polymer Symposium, Royal Australien Chemical Institute, February 4-8, 2001, Beechworth, Victoria, Australia, beschrieben.

Bevorzugt sind hyperverzweigte Polymere, in welchen zur Herstellung eine Zentralgruppe (Initiatorgruppe, Keim) verwendet wurde. Solche Zentralgruppen sind beispielsweise gegebenenfalls alkoxylierte Polyhydroxyverbindungen, wie Glycerin, Pentaerythrit [(HOCH₂)₄C] oder 2,2-Bishydroxymethylbutandiol (1,4), Trimethylolpropan, alkoxyliertes, vorzugsweise äthoxyliertes, Pentaerythrit, mit vorzugsweise etwa 5 Äthoxygruppen pro Molekül, und verwandte Verbindungen.

Die derart, gegebenenfalls mit einer Zentralgruppe, hergestellten hyperverzweigten Polymere weisen z.B. als Endgruppen Hydroxyl oder Carboxyl oder Amino auf. Diese Gruppen sind befähigt, mit einer Epoxidharzmatrix chemisch zu reagieren. Es ist aber auch möglich, die vorhandenen Endgruppen, beispielsweise die Hydroxylgruppen, mit einer reaktiven Epoxidgruppe, z.B. mit einer Verbindung der Formel Cl-CH₂-Epoxid, umzusetzen, so dass ein hyperverzweigtes Polymer erhalten wird, welches mit zahlreichen Epoxidether-Gruppen terminiert ist.

Bevorzugt sind Hyperverzweigte Polymere, welche insbesondere auf den folgenden Monomeren aufgebaut sind: 2,2-Dimethylolpropionsäure und einer Zentralgruppe. Bevorzugt sind hyperverzweigte Polyester und/oder Polyether, welche vorzugsweise als terminale Gruppen Hydroxyl, Amino, Carboxyl und/oder Epoxid enthalten.

Bevorzugt sind in weiteren Hyperverzweigte Polymere mit einem Molekulargewicht im Bereich von 2000 g/Mol bis 25000 g/Mol, insbesondere von 6000 g/Mol bis 15000 g/Mol, und mit Viskositäten im Bereich von 100 mPas bis 200 Pas gemessen bei 100°C, insbesondere von 2 Pas bis 100 Pas gemessen bei 100°C.

Hyperverzweigte Polymere sind beispielsweise unter der Marke Boltorn® der Firma Perstorp Chemicals, Schweden, oder der Marke Hybrane® der Firma DSM, Niederlande, im Handel erhältlich. Boltorn E2® ist ein hyperverzweigter Polyester auf der Basis von 2,2-Dimethylolpropionsäure, mit ethoxysiliertem Pentaerythrit als Initiatorgruppe, welcher terminale Epoxidgruppen aufweist.

Vorzugsweise enthält der erfindungsgemässe Füllstoff, das heisst das erfindungsgemäss mit einem hyperverzweigten synthetischen Polymer beschichtete anorganische Pulver, das hyperverzweigte Polymer in einer Menge von 0.5 - 15 Gew.-%, vorzugsweise von 1 - 8 Gew.-% und vorzugsweise in einer Menge von 4.0 - 6.0 Gew.-%, bezogen auf das Gesamtgewicht des beschichteten Füllstoffs, bzw. der erfindungsgemässe Füllstoff enthält das anorganische Pulver in einer Menge von 99.5 - 85 Gew.-%, vorzugsweise von 99 - 92 Gew.-% und vorzugsweise in einer Menge von 96.0 - 94.0 Gew.-%, bezogen auf das Gesamtgewicht des beschichteten Füllstoffs.

Den erfindungsgemässen Füllstoff stellt man beispielsweise her, indem man das, in einem geeigneten organischen Lösungsmittel wie Benzol oder Xylol gelöste, hyperverzweigte Polymer mit dem zu beschichtenden anorganischen Pulver gut vermischt, bei erhöhter Temperatur, z.B. im Bereich von 100°C - 140°C, während z.B. 30 Minuten bis 3 Stunden, stehen lässt bzw. rührt, bis das gelöste hyperverzweigte Polymere auf die Oberfläche des zu beschichtenden anorganischen Pulver aufgezogen ist, und anschliessend den Füllstoff isoliert, z.B. filtriert, und trocknet.

In diesem Sinne betrifft die vorliegende Erfindung ein Verfahren zur Herstellung des erfindungsgemässen Füllstoffs, welches dadurch gekennzeichnet ist, dass man das in einem geeigneten organischen Lösungsmittel gelöste hyperverzweigte Polymer, vorzugsweise bei erhöhter Temperatur, mit dem zu beschichtenden anorganischen Pulver vermischt und so lange stehen lässt bzw. rührt, bis das gelöste hyperverzweigte Polymere auf die Oberfläche des zu beschichtenden anorganischen Pulver aufgezogen ist, worauf man den Füllstoff isoliert und trocknet.

Der erfindungsgemäss Füllstoff kann in der Duroplastmatrix, vorzugsweise der Epoxidharzmatrix, in einer Menge von bis zu 80 Gew.-%, bezogen auf das Gesamtgewicht der Matrix, eingearbeitet werden. Die Matrix kann als Füllstoff den erfindungsgemässen Füllstoff alleine enthalten oder im Gemisch mit an sich bekannten nicht beschichteten anorganischen Füllstoffen, wie beispielsweise Siliziumoxid (SiO₂), Aluminiumoxid (Al₂O₃), Titanoxid (TiO₂) oder Dolomit (CaMg[CO₃]₂), in verschiedenen an sich bekannten Mahlungen.

Bevorzugt enthält die Matrix ausschliesslich einen erfindungsgemässen Füllstoff. Die Matrix kann aber neben dem erfindungsgemässen Füllstoff auch an sich bekannte nicht beschichtete anorganische Füllstoffe enthalten. In diesem Fall entfallen auf den erfindungsgemässe Füllstoff vorzugsweise mindestens 30 Gew.-% der gesamten anwesenden Füllstoffmenge, vorzugsweise mindestens 50 Gew.-%.

Die Matrix enthält vorzugsweise eine Gesamtmenge an Füllstoff im Bereich von 20 - 80 Gew.-%, vorzugsweise von 40 - 70 Gew.-%, und vorzugsweise von 50 - 65 Gew.-%, bezogen auf das Gesamtgewicht aller Matrixkomponenten.

Enthält die Matrix bzw. die Vergussmasse einen an sich bekannten Füllstoff, wie Aluminiumoxid, Quarzmehl, Titanoxid und/oder Dolomit, so können diese mit einer an sich bekannten Silanisierung versehen sein.

Als Matrix verwendet man vorzugsweise eine Epoxidharzmatrix bestehend aus den an sich bekannten Basiskomponenten eines härtbaren Epoxidharzes, das heisst bestehend aus dem Epoxidharz, dem Härter, dem gegebenenfalls anwesenden Beschleuniger sowie den weiteren Additiven wie Füllstoffe und Farbstoffe. Dabei enthält diese Mischung den erfindungsgemässen Füllstoff alleine oder in Kombination mit an sich bekannten Füllstoffen. Für die Herstellung des härtbaren Epoxidharzes, bzw. der härtbaren Epoxidharz-Mischung, kann man die Basiskomponenten des härtbaren Epoxidharzes sowie die weiteren Additive zusammen mit dem erfindungsgemässen Füllstoff in beliebiger Reihenfolge mischen.

Wie vorgehend beschrieben, weist das hyperverzweigte Polymere endständig reaktive Gruppen auf. Vorzugsweise geht man deshalb so vor, dass man den erfindungsgemässen Füllstoff in Abhängigkeit von der Art der reaktiven Gruppen entsprechend vormischt. Enthält der erfindungsgemässe Füllstoff Epoxidgruppen, so mischt man den Füllstoff vorzugsweise mit dem Epoxidgruppen enthaltenden Epoxidharz, insbesondere wenn man die Vergussmasse nicht sofort weiter verarbeitet. Enthält der erfindungsgemässe Füllstoff hingegen Hydroxyl, Amino oder Carboxyl, so mischt man den Füllstoff vorzugsweise mit dem Härter bevor man diesen in der Vergussmasse verwendet.

In einzelnen Fällen ist es von Vorteil, zumindest einen Teil des erfindungsgemässen Epoxidgruppen enthaltenden Füllstoffs mit dem Härter vorzumischen und auch vorzuhärten oder zumindest einen Teil der Hydroxyl, Amino oder Carboxyl enthaltenden Füllstoffs mit dem Epoxidharz vorzumischen und vorzuhärten. Dies wirkt sich positiv auf die Verteilung des erfindungsgemässen Füllstoffs in der Vergussmasse und somit auf die physikalischen und mechanischen Eigenschaften des gehärteten Produktes aus.

Die erfindungsgemässen Vergussmassen in flüssiger oder pastöser Form sind duroplastisch härtbare Giessharzsysteme in Form von Epoxidharzen. Bevorzugt sind diejenigen mit guten elektrischen Eigenschaften, vorzugsweise aromatische und/oder cycloaliphatische Epoxidharze. Solche in der Elektroindustrie verwendeten Epoxidharze sind an sich aus der Literatur bekannt und können erfindungsgemäss verwendet werden. Zahlreiche Publikationen existieren auch zu den elektrischen Araldit®-Giessharzsystemen der Ciba SC Ltd.

Epoxidharze für elektrische Anwendungen enthalten in der Regel eine Glycidylverbindung oder ein Gemisch von Glycidylverbindungen und mindestens eine hydroxylhaltige Verbindung oder ein Gemisch solcher Verbindungen und/oder ein carboxylhaltiges Polymer, insbesondere einen carboxylterminierten Polyester und/oder ein carboxylhaltiges Acrylat- und/oder Methacrylatpolymer sowie gegebenenfalls einen Beschleuniger für die Vernetzungsreaktion der Glycidylverbindung oder Glycidylverbindungen mit der hydroxylhaltigen Verbindung und/oder dem carboxylhaltigen Polymeren sowie an sich übliche weitere Additive.

Bevorzugt sind vernetzend wirkende Glycidylverbindungen, welche mindestens zwei 1,2-Epoxidgruppen im Molekül aufweisen. Vorzugsweise verwendet man ein Gemisch von Polyglycidylverbindungen, beispielsweise ein Gemisch von Diglycidyl- und Triglycidylverbindungen. Solche Verbindungen sind an sich bekannt und in der Literatur ausführlich beschrieben. In der Regel kann aus den bekannten Glycidylverbindungen eine für die vorgesehene elektrische Anwendung geeignete Auswahl getroffen werden, was für den Fachmann ein Optimierungsproblem darstellt.

Geeignete Glycidylverbindungen sind beispielsweise in EP-A-0 297 030, EP-A-0 356 391, EP-A-0 462 053, EP-A-0 506 617, EP-A-0 536 085 oder in U.S. Patent US-A-3,859,314 oder in der DE-A-31 26 411 beschrieben. Diese umfassen Verbindungen, die unsubstituierte Glycidylgruppen und/oder mit Methylgruppen substituierte Glycidylgruppen aufweisen. Die Glycidylverbindungen haben vorzugsweise ein Molekulargewicht zwischen 200 und 1200, insbesondere zwischen 200 und 1000 und können fest oder flüssig sein. Ihr Epoxidgehalt beträgt vorzugsweise mindestens drei Äquivalente pro Kilogramm der Verbindung, vorzugsweise mindestens vier Äquivalente pro Kilogramm und insbesondere mindestens fünf Äquivalente pro Kilogramm. Bevorzugt sind Glycidylverbindungen, die Glycidylether- und/oder Glycidylestergruppen aufweisen. Eine Glycidylverbindung kann dabei auch beide Arten von Glycidylgruppen enthalten, wie z.B. 4-Glycidyloxy-benzoesäureglycidylester. Bevorzugt sind Polyglycidylester mit 1-4 Glycidylestergruppen, insbesondere Diglycidylester und/oder Triglycidylester. Die bevorzugten Diglycidylester leiten sich vorzugsweise von aromatischen, araliphatischen, cycloaliphatischen, heterocyclischen, heterocyclisch-aliphatischen oder heterocyclisch-aromatischen Dicarbonsäuren mit 6 bis 20, insbesondere 6 bis 12 Ringkohlenstoffatomen oder von aliphatischen Dicarbonsäuren mit 2 bis 10 Kohlenstoffatomen ab. Solche Verbindung sind beispielsweise unter dem Handelsnamen Araldit® (Ciba SC Ltd) kommerziell erhältlich. Bevorzugt sind beispielsweise die an sich bekannten Epoxidharze auf Basis mehrwertiger aromatischer oder cycloaliphatischer Hydroxylverbindungen. Auf Basis von aromatischen Hydroxylverbindungen sind beispielsweise die Glycidylether von Bisphenol A oder Bisphenol F sowie die Glycidylether von Phenol-Novolak-Harzen oder Kresol-Novolak-Harzen bekannt. Cycloaliphatische Epoxidharze sind z.B. bis-epoxidierter 1,2,3,6-Tetrahydrobenzoesäure-beta-1',2',3',6'-tetrahydrophenylethylester, Hexahydro-o-phthalsäure-bis-glycidylester. Auch aliphatische Epoxidharze, wie z.B. 1,4-Butandioldiglycidylether, sind für die erfindungsgemässe Verwendung geeignet.

Als Härter zu verwendende hydroxylhaltige Verbindungen und/oder carboxylhaltige Polymere, insbesondere carboxylterminierte Polyester und/oder carboxylhaltige Acrylat- und/oder Methacrylatpolymere sowie gegebenenfalls zu verwendende Beschleuniger für die Vernetzungsreaktion der Glycidylverbindungen sowie an sich übliche weitere Additive sind an bekannt.

Die erfindungsgemässen Vergussmassen werden insbesondere für die Herstellung von strukturellen Feststoffisolationen bei Mittelund Hochspannungsanlagen, wie Generatorschalter oder gasisolierte Schaltanlagen (GIS-Schaltanlagen), eingesetzt. Beispiele sind Hochspannungsisolierungen für den Freilufteinsatz, insbesondere für die Herstellung von Freiluftisolatoren bei Hochspannungsleitungen als Langstab-, Verbund- und Kappenisolatoren, Stützisolatoren im Mittelspannungsbereich, Isolierungen bei Freiluft-Leistungschaltern, Messwandlern, Durchführungen und Ableitern, im Schaltanlagenbau, in Leistungsschaltern, Trockentransformatoren und elektrische Maschinen oder Schottungsisolatoren in gasisolierten metallgekapselten Schaltanlagen. Im weiteren können die erfindungsgemässen Vergussmassen auch als Beschichtungsmaterialien für Transistoren und andere Halbleiterelemente und ganz allgemein zum Imprägnieren von elektrischen Bauteilen verwendet werden. Ebenso kann die erfindungsgemässe Vergussmasse als Korrosionsschutz für metallische Bauteile, z.B. für Brücken und Industrieanlagen, verwendet werden.

Dabei wird das Formteil in einem Schritt oder in zwei oder mehreren Schritten hergestellt bzw. gegossen. So kann man zuerst einen Kern giessen, dessen Material keine erfindungsgemässe Vergussmasse enthält. In einem zweiten Schritt wird dann die fertige Form hergestellt, indem der Kern mit dem erfindungsgemässen Vergussmaterial überzogen wird. Dabei kann der Kern aus irgend einem geeigneten Material bestehen, beispielsweise aus einem faserverstärkten Kunststoff. Vorzugsweise wird als Kern ein Material verwendet, welches mit dem erfindungsgemässen Vergussmaterial kompatibel ist und insbesondere mit diesem eine chemische Bindung eingehen kann. Dies ist beispielsweise dann der Fall, wenn der Kern aus einem an sich bekannten Giessharz und der Überzug aus einem Giessharz besteht, welches das erfindungsgemässe Füllmaterial enthält. Im weiteren ist es möglich, dass das erfindungsgemässe Vergussmaterial auf einen Kern angegossen wird, und der Kern mit der Polymermatrix des Vergussmaterials keine chemische Bindung eingeht, dass aber aufgrund des Schrumpfdruckes des Vergussmaterials eine genügend starke mechanisch Verbindung zwischen dem Kern und dem angegossenen Teil entsteht.

Das folgenden Beispiel erläutert die Erfindung.

### Beispiel 1

A) In einem Rundkolben, ausgerüstet mit Rührer und Heizung, wurden 60 g des hyperverzweigten Polyesters mit terminalen Epoxidgruppen der Marke Boltorn E2® der Firma Perstorp Chemicals, Schweden, in 540 g Xylol gelöst. Die Verbindung hat ein durchschnittliches Molekulargewicht von etwa 15'000 g/Mol und bildet bei Raumtemperatur eine viskose Flüssigkeit. Sie weist im weiteren durchschnittlich 30 Epoxidgruppen pro Molekül auf, bzw. eine Epoxid-Äquivalent von 370-410 g/eq, bzw. 2.4-2.7 eq/kg. Anschliessend wurden 1100 g Quarzmehl (Quarzmehl W10 von Quarzwerke Frechen, Deutschland) eingerührt. Das Gemisch wurde dann auf 120°C erwärmt und während 2 Stunden unter Rühren bei dieser Temperatur gehalten und abkühlen gelassen. Das beschichtete Quarzmehl wurde abfiltriert und über Nacht bei 50°C im Vakuum (Druck <50mbar) getrocknet.
B) Der in Abschnitt A) erhaltene Füllstoff wurde nun in ein Epoxidharz wie folgt eingearbeitet und ausgehärtet. Zunächst wurde das Epoxidharz mit dem Härter und dem Beschleuniger bei Raumtemperatur während fünf Minuten gemischt. Dann wurde der gemäss diesem Beispiel in Abschnitt A) hergestellte und getrocknete erfindungsgemässe Füllstoff portionsweise zugegeben und während weiteren zehn Minuten bis zur gleichmässigen Verteilung intensiv eingerührt. Die erhaltene Mischung wurde dann auf 80°C erwärmt und während zehn Minuten einem Vakuum mit einem Restdruck im Bereich von 2 bis 5 mbar zur gänzlichen Entfernung aller Blasen ausgesetzt. Nun wurde eine Giessform auf eine Temperatur von 80°C gebracht und der Werkstoff bei dieser Temperatur vergossen. Die gefüllte Giessform wurde dann während zehn Minuten einem Vakuum mit einem Restdruck von 5 bis 10 mbar ausgesetzt. Die Gelierung und der Härtungsprozess wurden bei Normaldruck während 4 Stunden bei 80°C und anschliessend während 16 Stunden bei 140°C durchgeführt. Nach dem Aushärten und Abkühlen wurden aus dem Material Testproben geschnitten.
C) In einem Vergleichsversuch wurde die Abschnitte A) und B) dieses Beispiels wiederholt, jedoch mit der Massgabe, dass unbeschichtetes übliches Quarzmehl (Quarzmehl W10 von Quarzwerke Frechen, Deutschland) in derselben Menge verwendet wurde.

Die Zusammensetzung des Epoxidharzes ist in Tabelle 1 gegeben. Die gemessenen physikalischen Eigenschaften der erfindungsgemässen Zusammensetzung sowie die Resultate des Vergleichsversuchs sind in Tabelle 2 aufgelistet. Die Resultate zeigen, dass der erfindungsgemäss beschichtete Füllstoff deutlich bessere Resultate ergibt als der nicht beschichtete.

**Tabelle 1**

| Epoxidharzkomponenten basierend auf einem Diclycidylether von Bisphenol-A | Menge in Gewichtsteilen |
|---|---|
| CY225 (Harz-Vantico, Basel) | 100 |
| HY925 (Härter-Vantico, Basel) | 80 |
| DY062(Beschleuniger-Vantico, Basel) | 2 |
| Füllstoff, Quarzmehl W10, beschichtet gemäss Abschnitt A), Beispiel 1 | 270 |
| Füllstoff, Quarzmehl, unbeschichtet, Vergleichsversuch | 270 |

**Tabelle 2**

| Versuch | Critical Stress Intensity Factor (K_{IC}) [Mpam^{0.5}] | Critical Energy Release Rate (G_{IC}) [J/m²] | Glasübergangs temperatur DMA [°C] |
|---|---|---|---|
| Mit Füllstoff gemäss Abschitt A), Beispiel 1 | 2.43 | 509 | 114 |
| Vergleichsversuch gemäss Abschnitt C), Beispiel 1 | 2.01 | 352 | 112 |

### Beispiel 2

Beispiel 1 wurde wiederholt, mit der Massgabe, dass ein anderes Epoxidharz verwendet wurde. Die Zusammensetzung des in diesem Beispiel verwendeten Epoxidharzes ist in Tabelle 3 gegeben. Die gemessenen physikalischen Eigenschaften der erfindungsgemässen Zusammensetzung sowie die Resultate des Vergleichsversuchs sind in Tabelle 4 aufgelistet.

**Tabelle 3**

| Epoxidharzkomponenten basierend auf einem Tetraclycidyl-diamino-diphenylmethan | Menge in Gewichtsteilen |
|---|---|
| Araldit MY 721 (Harz-Vantico, Basel) | 100 |
| HHPA (Härter-Vantico, Basel) | 32 |
| MA (Co-Härter-Fluka, Schweiz) | 48 |
| Füllstoff, Quarzmehl W10, beschichtet gemäss Abschnitt A), Beispiel 1 | 270 |
| Füllstoff, Quarzmehl, unbeschichtet, Vergleichsversuch | 270 |

**Tabelle 4**

| Versuch | Critical Stress Intensity Factor (K_{IC}) [Mpam^{0.5}] | Critical Energy Release Rate (G_{IC}) [J/m²] | Glasübergangs temperatur DMA [°C] |
|---|---|---|---|
| Mit Füllstoff gemäss Abschitt A), Beispiel 1 | 1.89 | 329 | 213 |
| Vergleichsversuch gemäss Abschnitt C), Beispiel 1 | 1.61 | 212 | 216 |
| Vergleichsversuch mit Quarzmehl W10, unbeschichtet, mit Xylol gewaschen | 1.59 | 211 | 221 |

### Beispiel 3

Beispiel 1 wurde wiederholt, mit der Massgabe, dass als anorganisches Pulver Aluminiumoxid CL4400FG der Firma Alcoa, Deutschland analog zu Abschitt A), Beispiel 1, verwendet wurde und im Vergleichsversuch analog zu Abschnitt C), Beispiel 1, unbeschichtetes Aluminiumoxid CL4400FG der Firma Alcoa, Deutschland, eingesetzt wurde.

Die Zusammensetzung des in diesem Beispiel verwendeten Epoxidharzes ist in Tabelle 5 gegeben. Die gemessenen physikalischen Eigenschaften der erfindungsgemässen Zusammensetzung sowie die Resultate des Vergleichsversuchs sind in Tabelle 6 aufgelistet. Der erfindungsgemäss beschichtete Füllstoff gab auch hier deutlich bessere Resultate als der nicht beschichtete Füllstoff.

**Tabelle 5**

| Epoxidharzkomponenten basierend auf einem Diclycidylether von Bisphenol-A | Menge in Gewichtsteilen |
|---|---|
| CY225 (Harz-Vantico, Basel) | 100 |
| HY925 (Härter-Vantico, Basel) | 80 |
| DY062(Beschleuniger-Vantico, Basel) | 2 |
| Füllstoff, Aluminiumoxid CL4400FG, beschichtet gemäss Abschnitt A), Beispiel 1 | 415 |
| Füllstoff, Aluminiumoxid CL4400FG, unbeschichtet, Vergleichsversuch | 415 |

**Tabelle 6**

| Versuch | Critical Stress Intensity Factor (K_{IC}) [Mpam^{0.5}] | Critical Energy Release Rate (G_{IC}) [J/m²] | Glasübergangs temperatur DMA [°C] |
|---|---|---|---|
| Mit Füllstoff gemäss Abschitt A), Beispiel 1 | 2.08 | 324 | 113 |
| Vergleichsversuch gemäss Abschnitt C), Beispiel 1 | 1.71 | 251 | 115 |

## Patentansprüche

1. Füllstoff, welcher für die Verwendung in elektrischen Feststoff-Isolatoren auf der Basis einer Duroplastmatrix geeignet ist, **dadurch gekennzeichnet, dass** dieser aus anorganischen Pulverteilchen besteht, welche mit einer organischen hyperverweigten dendritischen polymeren Verbindung beschichtet sind.

2. Füllstoff nach Anspruch 1, **dadurch gekennzeichnet, dass** die anorganischen Pulverteilchen an sich bekannte in der Elektroindustrie verwendete Füllstoffe darstellen, vorzugsweise Siliziumoxid, Aluminiumoxid, Titanoxid und/oder Dolomit, vorzugsweise Siliziumoxid und/oder Aluminiumoxid.

3. Füllstoff nach Anspruch 1 oder 2, **dadurch gekennzeichnet, dass** die anorganischen Pulverteilchen eine durchschnittliche Korngrösse im Bereich von 1 µm bis 300 µm, vorzugsweise von 5 µm bis 100 µm aufweisen.

4. Füllstoff nach einem der Ansprüche 1 - 3, **dadurch gekennzeichnet, dass** die hyperverweigte dendritische polymere Verbindung auf einem ABₙ-Monomer aufgebaut ist, worin n zwei oder drei bedeutet, worin die beiden reaktiven Gruppen A und B befähigt sind, gegebenenfalls über ein Derivat derselben, zusammen chemisch zu reagieren und zu polymerisieren.

5. Füllstoff nach Anspruch 4, **dadurch gekennzeichnet, dass** die Gruppen A und B im ABₙ-Monomer verschieden voneinander sind und Hydroxyl, Amino oder Carboxyl bedeuten.

6. Füllstoff nach einem der Anspuch 4 oder 5, **dadurch gekennzeichnet, dass** das ABₙ-Monomere 5-Amino-isophthalsäure, 3,5-Diaminobenzoesäure, 2,2-Dimethylolpropionsäure, alpha,alpha-bis-(hydroxymethyl)-valeriansäure, alpha,alpha,alpha-tris(hydroxymethyl)essigsäure, 3,5-Dihydroxy-benzoesäure, oder 5-Hydroxy-isophthalsäure, vorzugsweise 2,2-Dimethylolpropionsäure, bedeutet.

7. Füllstoff nach einem der Ansprüche 1 - 6, **dadurch gekennzeichnet, dass** die hyperverweigte dendritische polymere Verbindung endständig Hydroxyl, Amino, Carboxyl und/oder Epoxidgruppen aufweist.

8. Füllstoff nach einem der Ansprüche 1 - 3, **dadurch gekennzeichnet, dass** die hyperverweigte dendritische polymere Verbindung einen Polyether darstellt, vorzugsweise mit endständigen Hydroxylgruppen, welche gegebenenfalls weiter funktionalisiert sind.

9. Füllstoff nach Anspruch 8, **dadurch gekennzeichnet, dass** der hyperverweigte Polyether durch kationische Polymerisation von 3-Ethyl-3-(hydroxymethyl)oxethan zusammen mit einer Zentralgruppe hergestellt wurde.

10. Füllstoff nach einem der Ansprüche 1 - 9, **dadurch gekennzeichnet, dass** zur Herstellung der hyperverweigten dendritischen polymeren Verbindung eine Zentralgruppe verwendet wurde, vorzugsweise eine, gegebenenfalls alkoxylierte, Polyhydroxyverbindung, vorzugsweise Glycerin, Pentaerythrit, 2,2-Bishydroxymethyl-butandiol(1,4), Trimethylolpropan, und/oder alkoxyliertes, vorzugsweise äthoxyliertes, Pentaerythrit, mit vorzugsweise etwa 5 Äthoxygruppen pro Molekül.

11. Füllstoff nach einem der Ansprüche 1 - 10, **dadurch gekennzeichnet, dass** die hyperverweigte dendritische polymere Verbindung einen Polyester oder Polyether darstellt, und vorzugsweise als terminale Gruppen Hydroxyl, Amino, Carboxyl und/oder Epoxid aufweist.

12. Füllstoff nach einem der Ansprüche 1 - 11, **dadurch gekennzeichnet, dass** die hyperverweigte dendritische polymere Verbindung ein Molekulargewicht im Bereich von 2000 g/Mol bis 25000 g/Mol, insbesondere von 6000 g/Mol bis 15000 g/Mol, aufweist.

13. Füllstoff nach einem der Ansprüche 1 - 12, **dadurch gekennzeichnet, dass** die hyperverweigte dendritische polymere Verbindung eine Viskosität im Bereich von 100 mPas bis 200 Pas gemessen bei 100°C, insbesondere von 2 Pas bis 100 Pas gemessen bei 100°C, aufweist.

14. Füllstoff nach einem der Ansprüche 1 - 13, **dadurch gekennzeichnet, dass** der Füllstoff das hyperverzweigte Polymer in einer Menge von 0.5 Gew.-% - 15 Gew.-%, vorzugsweise von 1 Gew.-% - 8 Gew.-% und vorzugsweise in einer Menge von 4.0 Gew.-% -6.0 Gew.-%, bezogen auf das Gesamtgewicht des beschichteten Füllstoffs, enthält.

15. Verfahren zur Herstellung des Füllstoffs nach einem der Ansprüche 1 - 14, **dadurch gekennzeichnet, dass** man das in einem geeigneten organischen Lösungsmittel gelöste hyperverzweigte Polymer, vorzugsweise bei erhöhter Temperatur, mit dem zu beschichtenden anorganischen Pulver vermischt, und so lange stehen lässt bzw. rührt, bis das gelöste hyperverzweigte Polymere auf die Oberfläche des zu beschichtenden anorganischen Pulver aufgezogen ist, worauf man den Füllstoff isoliert und trocknet.

16. Duroplastmatrix, vorzugsweise als Epoxidharzmatrix, **dadurch gekennzeichnet, dass** diese einen Füllstoff nach einem der Ansprüche 1 - 15 in einer Menge von bis zu 80 Gew.-%, vorzugsweise von 20 - 80 Gew.-%, vorzugsweise von 40 - 70 Gew.-%, und vorzugsweise von 50 - 65 Gew.-%, bezogen auf das Gesamtgewicht aller Matrixkomponenten, enthält.

17. Duroplastmatrix nach Anspruch 16, **dadurch gekennzeichnet, dass** diese zusätzlich auch einen an sich bekannten nicht beschichteten anorganischen Füllstoff, vorzugsweise Siliziumoxid, Aluminiumoxid, Titanoxid und/oder Dolomit, enthält,

18. Duroplastmatrix nach Anspruch 17, **dadurch gekennzeichnet, dass** diese den Füllstoff nach einem der Ansprüche 1 - 13 in einer Menge von mindestens 30 Gew.-%, vorzugsweise zu mindestens 50 Gew.-%, bezogen auf die gesamte anwesende Füllstoffmenge, enthält.

19. Duroplastmatrix nach einem der Ansprüche 16 - 18 in Form einer Vergussmasse in flüssiger oder pastöser Form als duroplastisch härtbares Giessharzsystem in Form eines Epoxidharzes.

20. Verwendung der Vergussmassen nach Anspruch 19 zur Herstellung von strukturellen Feststoffisolationen bei Mittelund Hochspannungsanlagen, vorzugsweise Generatorschalter oder gasisolierte Schaltanlagen, Hochspannungsisolierungen für den Freilufteinsatz, vorzugsweise für die Herstellung von Freiluftisolatoren bei Hochspannungsleitungen als Langstab-, Verbundund Kappenisolatoren, Stützisolatoren im Mittelspannungsbereich, Isolierungen bei Freiluft-Leistungschaltern, Messwandlern, Durchführungen und Ableitern, im Schaltanlagenbau, in Leistungsschaltern, Trockentransformatoren und elektrische Maschinen oder Schottungsisolatoren in gasisolierten metallgekapselten Schaltanlagen, als Beschichtungsmaterialien für Transistoren und andere Halbleiterelemente, zum Imprägnieren von elektrischen Bauteilen, oder als Korrosionsschutz für metallische Bauteile.

21. Elektrische Feststoff-Isolatoren, elektrische Isolierungen und Beschichtungen nach Anspruch 20, **dadurch gekennzeichnet, dass** diese mindestens einen Füllstoff nach einem der Ansprüche 1 - 15 enthalten.
